# EUROPÄISCHE PATENTSCHRIFT

(11) **EP 2 090 472 B1**
(45) Veröffentlichungstag und Bekanntmachung des Hinweises auf die Patenterteilung: **04.05.2011**
(21) Anmeldenummer: 09405020.0
(22) Anmeldetag: 02.02.2009
(51) Int. Cl.: B60R 19/18, B60R 19/34

(54) **Stossfänger mit Halterungen für ein Fahrzeug**
Bumper with supports for a vehicle
Pare-chocs pour véhicule et ses supports

(30) Priorität: 15.02.2008 DE 102008009493; 23.06.2008 DE 102008029634
(43) Veröffentlichungstag der Anmeldung: 19.08.2009
(73) Patentinhaber: Engineered Products Switzerland AG, 8048 Zürich (CH)
(72) Erfinder: Frank, Simon, 78250 Tengen (DE); Feuerstein, Martin, 78224 Singen (DE)
(74) Vertreter: Fénot, Dominique

(56) Entgegenhaltungen:
- EP-A- 1 533 192
- EP-A- 1 595 749
- DE-A1- 10 206 011

## Beschreibung

Die Erfindung betrifft einen Stoßfänger mit an diesem angebrachten Deformationselementen oder Halterungen zu dessen Befestigung an einem Fahrzeug -- insbesondere an Längsträgern eines Personenkraftwagens --, wobei in Abstand zueinander als Außen- oder Druckgurt bzw. als Innen- oder Zuggurt angeordnete Profilwände und ein Paar diesen angeformte Quer- und Flankenwände den Stoßfänger bilden, nach dem Oberbegriff des Patentanspruchs 1. Jener als Hohlprofil gestaltete Stoßfänger kann im Übrigen gegebenenfalls zumindest im Bereich der Halterungen gegenüber einer Querebene der Längsachse des Fahrzeugs gewölbt ausgebildet sein.

Eine solche Stoßstange ist der DE 102 09 721 A1 der Anmelderin zu entnehmen. Bei dieser Stoßstange sind die Halterungen jeweils als Hohlprofil aus zwei Seitenwänden und zwei an diese fest anschließenden Querwänden mit einem dem Längsträger zugeordneten Steckabschnitt des Hohlprofils gestaltet sowie mit der Stoßstange verschraubt. Das Hohlprofil der Stoßstange kann gegebenenfalls zumindest im Bereich der Halterungen gegenüber einer Querebene der Längsachse des Fahrzeugs gewölbt ausgeführt sein.

Mit der DE 298 23 973 U1 werden besonders leichte Stoßstangen vorgeschlagen, die in stark belasteten Bereichen durch ein zusätzliches Profil verstärkt werden. Dabei kann das Verstärkungsprofil auch aus einem Teil einer Haltevorrichtung für die Stoßstange bestehen. In letzterem Fall erweitern sich die Seitenwände der Haltevorrichtung konisch und kommen mit den Profilleisten der Stoßstange in Anlage, an deren innerer Profilwand das Verstärkungsprofil angelegt und die Haltevorrichtung dann verschraubt wird.

Mit der EP 1 533 192 der Anmelderin wird ein Stoßfänger nach dem Oberbegriff des Anspruchs 1 vorgeschlagen, wobei die Halterungen Deformationselemente sind, die mit einer Stirnfläche der Innenfläche des Außen- oder Druckgurtes zugeordnet und mit dem Stoßfänger verschweißt sind.

Diese nach dem Stande der Technik gestalteten Stoßstangen dienen zur Abwehr von größeren Stoßkräfte etwa beim Zusammenstoss zweier Fahrzeuge und sind im Allgemeinen verhältnismäßig groß.

Bei einer geschraubten Eckverbindung zwischen einem als Aluminium-Strangpressprofil gestalteten Stoßfängerquerträger und einem Deformationselement rutscht erfahrungsgemäß bei hoher Belastung zwischen letzterem sowie dem Querträger die Verbindung. Schweißt man aber das Deformationselement auf den Querträger stumpf auf, reißt es im Bereich der Schweißnaht als Wärmeeinflusszone bei starker Deformation bzw. Biegung des Querträgers ein bzw. ab.

In Kenntnis dieser Gegebenheiten hat sich der Erfinder das Ziel gesetzt, eine Stoßstange der eingangs erwähnten Art zu schaffen, eine stabile Verbindung zwischen der Stoßstange bzw. deren Hohlprofil sowie den diesen zugeordneten Halterungen erzeugt.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Erfindungsgemäß ist das Deformationselement bzw. die Halterung mit einer Stirnfläche der Innenfläche des Außen- oder Druckgurtes zugeordnet -- durchsetzt also den Innen- oder Zuggurt --, und es ist mit dem Stoßfänger verschweißt. Dazu hat es sich als günstig erwiesen, dass die Halterung den Innen- bzw. Zuggurt des Stoßfängers durchsetzt.

Der Zuggurt des Stoßfängers wird also im Bereich der Anbindung an das Deformationselement ausgestanzt und letzteres in den so geöffneten Stoßfänger bis zu dessen Außen- oder Druckgurt eingesteckt. Dann wird es auf der zur Fahrzeugmitte weisenden Seite mit jenem Innengurt in Querrichtung sowie auf der Fahrzeugaußenseite in Längsrichtung mit Querwänden des Stoßfängers verschweißt. Besondere Bedeutung haben die Schweißnähte in Längsrichtung, da sie bei Biegung des Stoßfängers oder Querträgers nicht einreißen. Außerdem bleibt durch sie die Außenseite des Deformationselementes frei von Wärmeeinflusszonen. Abkragungen des Stoßfängers nach oben und unten verhindern zudem dessen Einreißen bei Biegungsvorgängen.

Das Einschieben des Deformationselements in den Stoßfänger kann so weit erfolgen, dass die Stirnfläche der Innenfläche des Stoßfängers anliegt. Jedoch ist es auch möglich, die Stirnfläche der Halterung in geringem Abstand zur Innenfläche des Stoßfängers anzuordnen.

Zum Einschieben des Deformationselementes bzw. der Halterung geht von der Stirnfläche des Stoßfängers eine Ausnehmung des Innen- oder Zuggurtes aus, die sich zwischen den beiden Quer- oder Flankenwänden erstreckt und an einer zwischen diesen verlaufenden Stirnkante des Innen- oder Zuggurtes endet, die ein seitliches Anschlagselement für die Halterung bildet. Letztere wird durch Schweißnähte mit ihr zugekehrten Oberflächen der Querwände des Querträgers und/oder mit der Oberfläche des Innen- oder Zuggurtes verbunden, also verschweißt.

Im Rahmen der Erfindung liegt es auch, dass die Halterung bzw. das Deformationselement einen Mittelsteg durchsetzt, der dem Stoßfänger parallel zu dessen Querwänden angeformt ist. Der Mittelsteg soll im Anlagebereich der Stirnfläche der Halterung bevorzugt als Reststreifen geringen Querschnittes verlaufen.

In einer besonderen Ausgestaltung der Erfindung ist der Mittelsteg einer der beiden Querwände der Halterung in geringem Abstand i. w. parallel zugeordnet; Mittelsteg und benachbarte Querwand bestimmen dabei einen Verstärkungsbereich des Stoßfängers. Stoßfänger bzw. Querträger und Halterung bzw. Deformationselement können erfindungsgemäß eine oder mehrere Kammern enthalten. Bei Stoßfänger mit mehreren Kammern lässt sich dessen Stabilität durch Verschieben jenes Mittelsteges und durch Erhöhen der Wanddicken im Aufprallbereich lokal erhöhen.

Erfindungsgemäß ist an einer Ausgestaltung der Halterung im Bereich einer Stirnseite ein als Hohlprofil ausgebildetes Anschlussprofil -- bevorzugt axial angeformt -- vorgesehen, dessen Höhe dem Abstand der beiden Quer- oder Flankenwände des zugeordneten Stoßfängers und dessen Kraglänge der Breite des Stoßfängers entspricht.

Zu dieser Ausgestaltung der Halterung soll der Querträger so ausgebildet sein, dass er zwei geschlossene äußere Kammern sowie eine in Richtung der Anbindung an das Fahrzeug geöffnete Kammer enthält. Auch das Deformationselement kann eine oder mehrere mittlere Kammern erfassen, deren Höhe der Höhe der geöffneten Kammer des Querträgers entspricht. Die mittlere Kammer des Deformationselements wird auf der Länge, um die es in den Querträger eingesteckt werden soll, durch mechanische Bearbeitung freigelegt. Querträger und Deformationselement werden verschweißt. Das Anschussprofil wird also in eine offene Kammer des Stoßfängers eingeschoben, der beidseits jeweils eine geschlossene Kammer zugeordnet ist.

Die geschlossene Kammer ist erfindungsgemäß von einer Querwand des Stoßfängers sowie einem angeformten Rinnenprofil begrenzt. Zudem soll eine vom Anschlagprofil in Abstand von dessen Stirnkante ausgehende Stirnkante des Deformationsprofils dem Rinnenprofil des Stossfängers zugeordnet und mit der Außenfläche von dessen innerem Profilgurt verschweißt sein.

Somit ergeben sich die nachfolgend aufgelisteten Besonderheiten:
- Das auch als Crashbox bezeichnete Deformationselement 60, 60ₐ wird bis zur Vorderkante des Trägers bzw. bis 10 mm davor in den Querträger eingesteckt; dadurch ergibt sich die Möglichkeit, Deformationselement und Querträger in Längsrichtung zu verschweißen, um die Stabilität zu erhöhen.
- Der Querträger wird in einem Bruchgurt mit Abkragungen nach oben und unten verstärkt, um seine Biegesteifigkeit zu verbessern.
- Es erfolgt ein Aufdicken der Wandstärke des Querträgers im Aufschlagbereich eines Impaktors durch ein Verschieben des Mittelsteges in diesem Bereich; dies geschieht, um den Querträger lokal zu verstärken.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Stoßstange mit -- an beiden Enden der Stoßstange unterschiedlich ausgebildeten -- Halterungen nach dem Stand der Technik zum Anschluss an einen Längsträger;
- Fig. 2:: eine Schrägsicht auf einen Teil der Stoßstange nach Fig. 1 mit Halterung;
- Fig. 3:: eine Schrägsicht auf einen Teil einer erfindungsgemäßen Stoßstange, und auf eine Seite eines abragenden Deforma- tionselements;
- Fig. 4:: eine Schrägsicht auf eine andere Seite des Deformationselements der erfindungsgemäßen Stoßstange mit Ansicht einer Anbindung von innen;
- Fig. 5:: die Schrägsicht auf die Stoßstange ohne Deformationselement;
- Fig. 6, 7:: zwei Darstellungen der lokalen Verstärkung eines anderen Querträgers in Abhängigkeit der relativen Lage des Querträgers zu einem Impaktor;
- Fig. 8:: eine Schrägsicht auf eine Anbindung mit einem Dreikammer-Deformations- element sowie
- Fig. 9:: die freigelegte mittlere Kammer des Deformationselements.

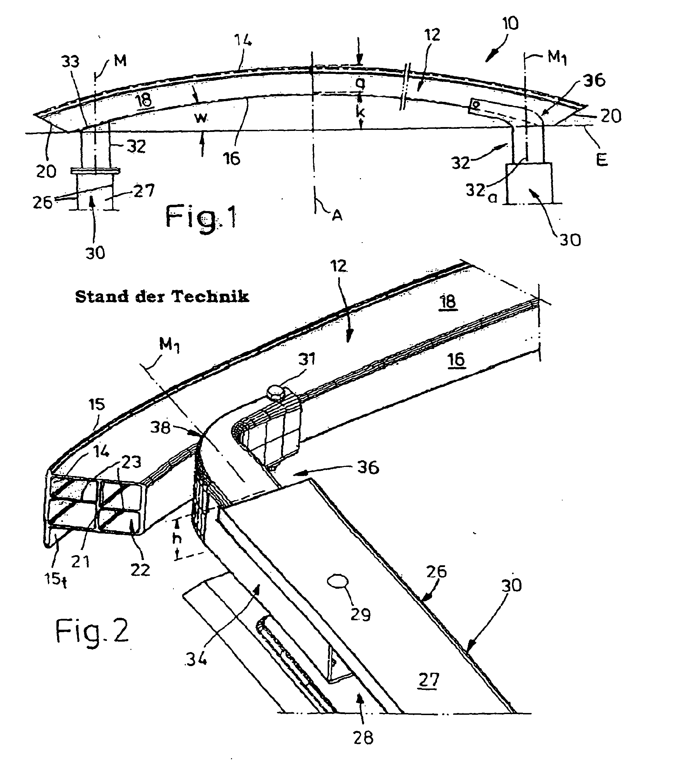

Eine aus einer Aluminiumlegierung stranggepresste Stoßstange 10 eines aus Gründen der Übersichtlichkeit nicht wiedergegebenen Personenkraftwagens weist gemäß Fig. 1 zwei in Abstand a zueinander verlaufende Profilwände 14, 16 auf, die durch Flankenwände 18 zu einem kastenförmigen Hohlprofil 12 ergänzt sind. Letzteres ist einer zur Fahrzeuglängsachse A im rechten Winkel verlaufenden Querebene E zugeordnet sowie beidseits der hier eine Symmetrieebene bildenden Fahrzeuglängsachse A zu jener Querebene E hin gleichmäßig gekrümmt; das Hohlprofil 12 bestimmt zu dieser hin sowie zur Längsachse A ein paralleles und in Abstand zu letzterem abnehmendes Krümmungsmaß k. In Einbaulage bildet die von der Querebene E weg weisende äußere Profilwand 14 einenStoßkräfte aufnehmenden -- Außen- oder Druckgurt sowie die andere Profilwand 14 einen Innen- oder Zuggurt.

Im Profilinnenraum 22 des Hohlprofils 12 ist einstückig mit den Profilwänden 14, 16 sowie den diese verbindenden Flankenwänden 18 eine -- parallel zu den Profilwänden 14, 16 gerichtete -- Querwand 21 mit jeweils einer zwischen dieser und den Profilwänden 14, 16 verlaufenden Mittelwand 23 vorgesehen. Diese Mittelwände 23 sind zueinander beispielhaft seitenversetzt.

Den beiden Stirnkanten 20 der Stoßstange 10 ist jeweils ein Fahrzeuglängsträger 30 zugeordnet, der parallel zur Fahrzeuglängsachse A verläuft. Diese Fahrzeuglängsträger 30 sind jeweils aus zwei parallelen Seitenwänden 26 und diese verbindenden Querwänden 27 zusammengesetzt, die einen Innenraum 28 des Fahrzeuglängsträgers 30 begrenzen. In Fig. 2 ist die zweite Seitenwand 26 aus Gründen der Übersichtlichkeit nicht eingezeichnet.

Nahe den Stirnkanten 20 des Hohlprofils 12 sind in Fig. 1 Beispiele von rohrartigen Deformationsorganen 32 aus einem Profilstück angedeutet, das zum einen an der inneren Profilwand 16 angebracht sowie andernends mit einem Steckabschnitt 32a in den Fahrzeuglängsträger 30 eingesetzt ist. Beispielsweise ist das aus einem aus Leichtmetall stranggepressten Profilelement gefertigte Deformationsorgan 32 nahe der linken Stirnkante 20 des Hohlprofils 12 an dem der Stoßstange 10 zugewandten Ende angeschrägt; die so entstehende Schrägkante 33 des Profilelements 32 bestimmt mit der Querebene E einen Winkel w von beispielsweise 10°.

Eine am rechten Ende der Stoßstange 10 in Fig. 1 angedeutete andere Ausgestaltung des Anschlusses des Hohlprofils 12 an den Fahrzeug-Längsträger 30 ist im Detail der Fig. 2 zu entnehmen. Deutlich wird hier, dass die als Außengurt dienende Profilwand 14 beide Quer- oder Flankenwände 18 mit flügelartigen Wandabschnitten als Kantenstreifen 15, 15ₜ übergreift.

Der Anschluss des Hohlprofils 12 an den Fahrzeuglängsträger 30 wird hier durch ein aus einem -- seinerseits aus einer Aluminiumlegierung stranggepressten -- Hohlprofil einer Höhe h als Halteglied 36 hergestellt. An dessen dem Fahrzuglängsträger 30 zugeordneten und in diesem verschraubten Steckabschnitt 34 des Hohlprofils 36 der Halterung schließt ein Krümmungsabschnitt 38 an. Die in Fig. 2 rechte Seitenwand ist nach außen gekrümmt und die andere Seitenwand endwärts an diese so herangeführt, dass beide Seitenwände aufeinander liegen und jede der beiden Querwände etwa in ihrer Mitte gefaltet ist. Dabei verläuft die innere Krümmungskontur entsprechend der Außenfläche der inneren Profilwand 16 des Hohlprofils 12, d.h. sie schließt mit einer Parallelen zur Querebene E den erwähnten Winkel w ein.

Die doppellagigen Schenkel des so entstandenen rinnenartigen Krümmungsabschnitts 38 werden im Bereich von -- in der Zeichnung nicht erkennbaren -- Durchbrüchen von Schrauben 31 od. dgl. Verbindungsorganen durchsetzt, welche zudem in stoßstangenseitige Durchbrüche der Flankenwände 18 eingreifen. Entsprechende Durchbrüche für Verbindungsorgane sind im Steckabschnitt 34 des Haltegliedes 36 vorgesehen; diese Verbindungsorgane lagern im Fahrzeuglängsträger 30 in Durchbrüchen 29.

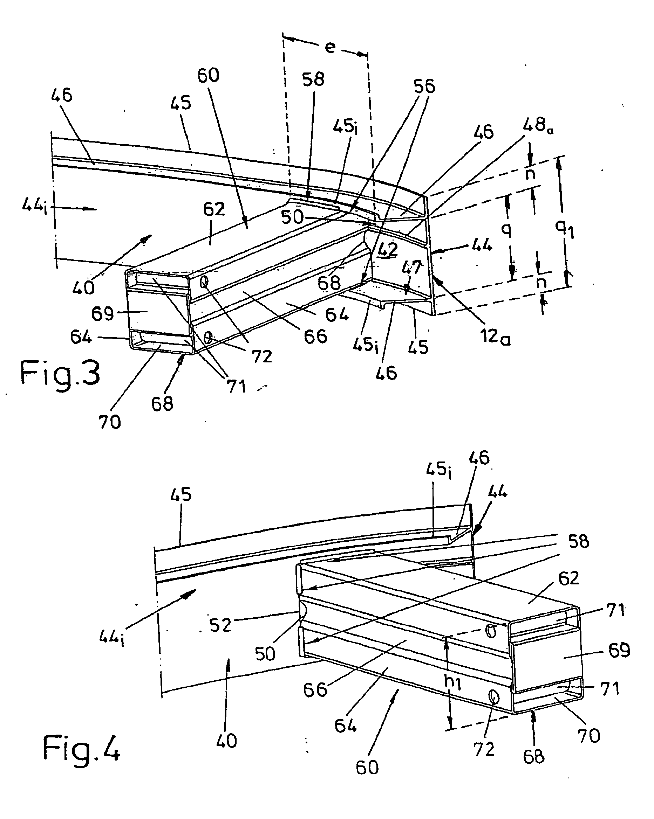

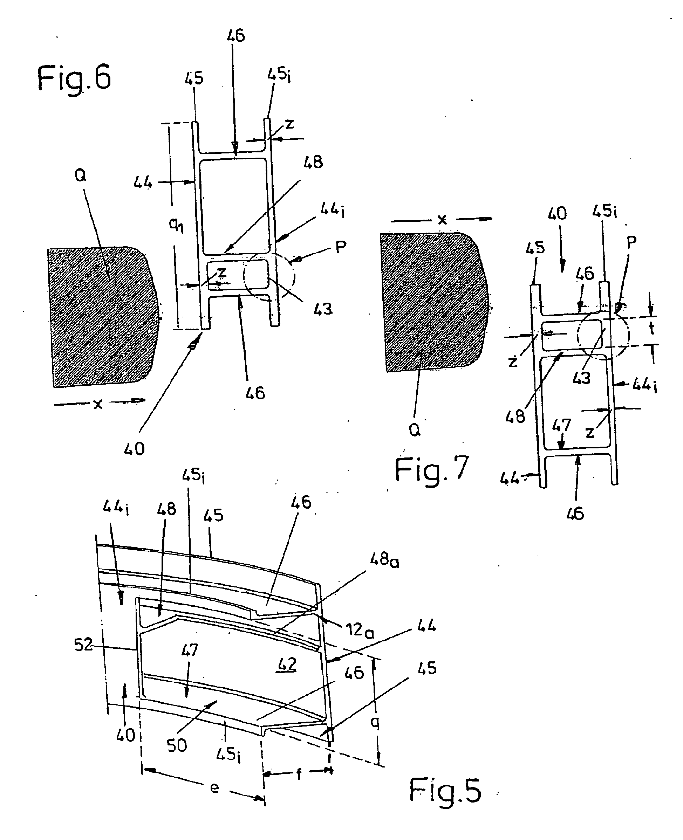

Eine erfindungsgemäße Anbindung eines Querträgers 40 einer Stoßstange an ein Deformationselement 60 verdeutlicht Fig. 3. Von der Innenfläche 42 eines in Draufsicht gebogenen Außen- oder Profilgurts 44 des Querträgers 40 ragen in kurzen Abständen n zu dessen Längskanten 45 sowie in einem lichten Abstand q zueinander Querwände 46 der Kraglänge f (Fig. 5) ab und zwischen diesen ein Mittelsteg 48, der in Fig. 5 deutlich zu erkennen ist. Ein innerer Profilgurt 44ᵢ verbindet die Querwände 46 andererseits und überragt diese mit einer leistenartigen Oberkante 45ᵢ geringer Höhe.

Der innere Profil- oder Vordergurt 44ᵢ des Querträges 40 sowie der -- gegebenenfalls vorhandene -- Mittelsteg 48 werden im Bereich der Anbindung an das Deformationselement 60 so ausgestanzt, dass sich -- wie Fig. 5 darstellteine rechteckige Ausnehmung 50 der Länge e ergibt, deren Höhe jenem Abstand q der Querwände 46 entspricht. Gegenüber der von der Stirnkante 12a des Querträgers 40 ausgehenden Ausnehmung 50 verläuft an der Innenfläche 42 des Außengurtes 44 ein Reststreifen 48ₐ geringen Querschnitts des Mittelstegs 48; letzterer beginnt an der Seitenkante 52 der Ausnehmung 50.

Das Deformationselement 60 wird in die so hergestellte Ausnehmung 50 des Querträgers 40 in Richtung Innenfläche 42 des Außengurtes 44 -- beispielsweise in Abstand von 30 mm bis 0,1 mm, vorzugsweise 10 mm -- oder bis zur Innenfläche 42 von dessen äußerem Profilgurt 44 bzw. bis zu jenem Reststreifen 48ₐ eingesteckt und der zur Fahrzeugmitte hin weisenden, in Fig. 4 erkennbaren Seitenkante 52 der Ausnehmung 50 angelegt; die Seitenkante 52 bildet also ein Anschlagelement. Das Deformationselement 60 wird dann in seiner Querrichtung mit dem Innengurt 44ᵢ durch Schweißnähte 58 sowie mit den Oberflächen 47 der Querwände 46 des Querträgers 40 durch Schweißnähte 56 in Längsrichtung des Deformationselementes 60 verschweißt.

Besondere Bedeutung haben die Schweißnähte 56 in Längsrichtung, da sie bei Biegung des Querträgers 40 nicht einreißen. Außerdem bleibt durch sie die Außenseite der sog. Crashbox frei von Wärmeeinflusszonen. Die Abkragungen des Querträgers 40 nach oben und unten mit den erwähnten Längskanten 45, 45ᵢ verhindern dessen Einreißen bei Biegung.

Deformationselement 60 und Querträger 40 können eine oder mehrere Kammern enthalten. Bei einem Querträger 40 mit mehreren Kammern lässt sich dessen Stabilität durch Verschieben des Mittelsteges 48 und durch Erhöhen der Wandstärken im Aufprallbereich lokal verbessern, wie weiter unten erörtert.

Das Deformationselement 60 ist bevorzugt von rechteckigem Querschnitt, in dessen Höhe h₁ in Fig. 4 es in seinem von Querwänden 62 verbundenen Seitenwänden 64 jeweils mittig eine Rinneneinformung 66 aufweist. Nahe der Stirnkante 68 des Deformationselementes 60 ist dessen Innenraum 70 bevorzugt von zwei Querrohren 71 durchsetzt, welche jeweils Paarungen miteinander fluchtender Durchbrüche 72 in den Seitenwänden 64 verbinden, zwischen denen eine querschnittlich etwa U-förmige Querrippe 69 angeordnet sein kann.

Bei verschiedenen Crashtests -- die für die Straßenzulassung eines Fahrzeugs Vorraussetzung sind -- ist stets die Höhe des sog. Impaktors als Barriere oder standardisiertes Prallelement -- in Fig. 6, 7 bei Q angedeutet -- genormt. Je nach Bauart des Fahrzeugs variiert aber die Höhe des Stoßfänger-Querträgers 40, da seine Gesamthöhe qₗ durch die Höhe der Längsträger 30 vorgegeben ist. Um bei der Kollision mit dem in Stossrichtung x geführten Impaktor Q im Crashversuch eine möglichst hohe Steifigkeit des Querträgers 40 zu erreichen, wird dessen in Fig. 6, 7 durchgehender Mittelsteg 48 im leiterähnlichen Querschnitt des Querträgers 40 so positioniert, dass er in der Aufprallebene bzw. auf der Höhe des Aufprallpunktes liegt. Zudem werden im Aufprallbereich die Wanddicken z von Außengurt 44 und innerem Profilgurt 44ᵢ erhöht, wie dies im Bereich P von Fig. 6, 7 angedeutet ist; bei P sind die Wanddicken z im Wandabschnitt 43 zwischen dem durchgehenden Mittelsteg 48 und der in einem Abstand t benachbarten Querwand 46 (in Fig. 5: unten; in Fig. 6: oben) erheblich erhöht.

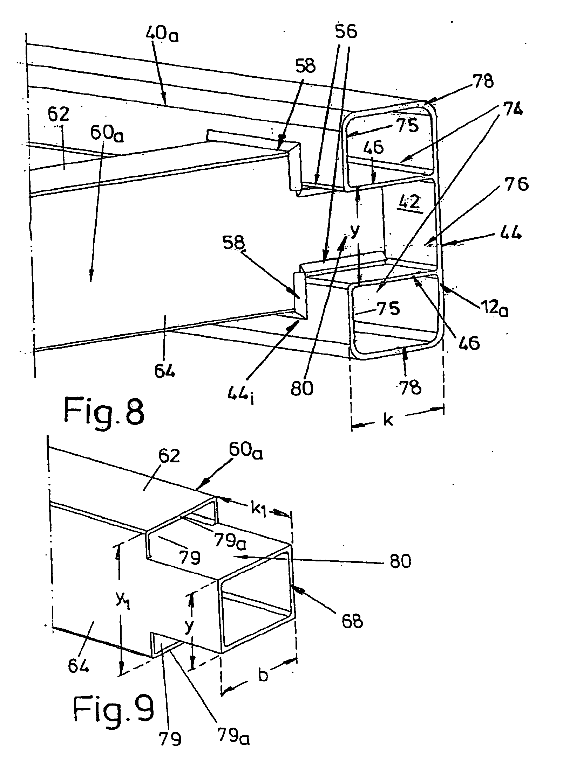

Der Querträger 40ₐ der Fig. 8, 9 ist so ausgebildet, dass er zwei geschlossene äußere Kammern 74 an den Querschnittsenden sowie eine in Richtung der Anbindung an das Fahrzeug -- über die gesamte Länge des Querträgers 40ₐ -- geöffnete Kammer 76 enthält. Die geschlossenen Kammern 74 kragen in vertikalem Abstand y voneinander von dem äußeren Profilgurt 44 ab und begrenzen mit den Profilquerwänden 46 als Kammerboden die offene Kammer 76. Jeweils an die Profilquerwände 46 und den Profilgurt 44 angeformte mehrkantige Rinnenprofile 78 decken die beiden geschlossenen Kammern 74 ab.

In die offene Kammer 76 ist ein Anschlussprofil 80 der Höhe y und der Breite b eines Deformationselementes 60ₐ eingeschoben. Seine Kraglänge kₗ entspricht der Querschnittstiefe der offenen Kammer 76 des Deformationselementes 60ₐ, dessen Breite b die Breite des Anschlussprofils 80 vorgibt. Jedoch ist des letzteren Höhe y kürzer als die Höhe yₗ des Deformationselementes 60ₐ. Die Höhendifferenz entsteht durch zwei weitere Kammern 79, deren Stirnkanten 79ₐ in Einbaulage nach Fig. 8 den Teile des inneren Profilgurt bildenden Innenwandungen 75 anliegen und mit diesen beispielsweise durch Schweißnähte 58 in Querrichtung verbunden sind. Jenes Anschlussprofil 80 kann durch Schweißnähte 56 in Längsrichtung an die Querwände 46 als Querträger 40ₐ angefügt sein.

Das Deformationselement 60 hat eine oder mehrere mittlere Kammern im Anschlussprofil 80, deren Höhe der Höhe der geöffneten Kammer 76 des Querträgers 40ₐ entspricht. Das Anschlussprofil 80 des Deformationselementes 60 wird auf eine Länge, um die es in den Querträger 40ₐ eingesteckt werden soll, durch mechanische Bearbeitung freigelegt. Querträger 40ₐ und Deformationselement 60 werden verschweißt.

Es entstehen u. a. die folgenden Vorteile durch die erfindungsgemäßen Schritte:
- Höheres Kraftniveau und somit höhere Energieaufnahme bei gleichem Gewicht;
- beim Biegen des Querträgers 40, 40ₐ können die in Längsrichtung positionierten Schweißnähte 56 hohe Lasten aufnehmen;
- die Außenseiten der Deformationselemente 60, 60ₐ sind frei von Wärmeeinflusszonen.
- Das frühzeitige Kollabieren des Querträgers 40, 40ₐ wird verhindert.
- Der Querträger 40, 40ₐ kollabiert nicht im Anbindungsbereich.
- Die Krafteinleitung erfolgt direkt auf das Deformationselement 60, 60ₐ.

## Patentansprüche

1. Stoßfänger mit an diesem angebrachten Deformationselementen (60) als Halterungen zu dessen Befestigung an einem Fahrzeug, insbesondere an Längsträgern eines Personenkraftwagens, wobei in Abstand zueinander als Außen- oder Druckgurt (44) bzw. als Innen- oder Zuggurt (44ᵢ) angeordnete Profilwände und ein Paar diesen angeformte Quer- oder Flankenwände (46) den Stoßfänger bilden sowie das Deformationselement als Hohlprofil mit Seitenwänden und diese verbindenden Querwänden gestaltet ist,
wobei das Deformationselement bzw. die Halterung (60, 60ₐ) mit einer Stirnfläche (68) der Innenfläche (42) des Außen- oder Druckgurtes (44) zugeordnet und mit dem Stoßfänger (40, 40ₐ) verschweißt ist.
**dadurch gekennzeichnet, daß** das Deformationselement bzw. die Halterung (60, 60ₐ) auf der zur Fahrzeugmitte weisenden Seite mit jenem Innengurt in Querrichtung sowie auf der Fahrzeugaußenseite in Längsrichtung mit Querwänden (46) des Stoßfängers verschweißt ist.

2. Stoßfänger nach Anspruch 1, **dadurch gekennzeichnet, dass** die Halterung (60, 60ₐ) den Innen- bzw. Zuggurt (44ᵢ) des Stoßfängers (40, 40ₐ) durchsetzt.

3. Stoßfänger nach Anspruch 1 oder 2, **dadurch gekennzeichnet, dass** die Stirnfläche (68) der Innenfläche (42) des Stoßfängers (40, 40ₐ) anliegt.

4. Stoßfänger nach Anspruch 1 oder 2, **dadurch gekennzeichnet, dass** die Stirnfläche (68) der Halterung (60) in geringem Abstand zur Innenfläche (42) des Stoßfängers (40) verläuft.

5. Stoßfänger nach einem der Ansprüche 1 bis 4, **dadurch gekennzeichnet, dass** die Halterung (60, 60ₐ) einen Mittelsteg (48) durchsetzt, der parallel zu den Querwänden (46) angeformt ist.

6. Stoßfänger nach Anspruch 4 oder 5, **dadurch gekennzeichnet, dass** der Mittelsteg (48) im Anlagebereich der Stirnfläche (68) der Halterung (60) als Reststreifen (48ₐ) geringen Querschnittes verläuft.

7. Stoßfänger nach Anspruch 6, **dadurch gekennzeichnet, dass** der Mittelsteg (48) einer der beiden Querwände (46) in geringem Abstand (t) zugeordnet ist.

8. Stoßfänger nach Anspruch 5, **dadurch gekennzeichnet, dass** Mittelsteg (48) und benachbarte Querwand (46) einen Verstärkungsbereich (P) des Stoßfängers (40, 40ₐ) bestimmen.

9. Stoßfänger nach einem der Ansprüche 1 bis 8, **dadurch gekennzeichnet, dass** von seiner Stirnfläche (12ₐ) eine Ausnehmung (50) des Innen- oder Zuggurtes (44ᵢ) ausgeht, die sich zwischen den beiden Quer- oder Flankenwänden (46) erstreckt und an einer zwischen diesen verlaufenden Stirnkante (52) des Innen- oder Zuggurtes endet.

10. Stoßfänger nach Anspruch 9, **dadurch gekennzeichnet, dass** die Stirnkante (52) als seitliche Anschlagskante für die Halterung (60) ausgebildet ist.

11. Stoßfänger nach einem der Ansprüche 1 bis 10, **dadurch gekennzeichnet, dass** die Halterung (60, 60ₐ) durch Schweißnähte (56, 58) mit ihr zugekehrten Oberflächen (47) der Querwände (46) des Querträgers (40, 40a) und/oder mit der Oberfläche des Innen- oder Zuggurtes (44ᵢ) verbunden ist.

12. Stoßfänger nach einem der Ansprüche 1 bis 11, **dadurch gekennzeichnet, dass** an der Halterung (60ₐ) im Bereich einer Stirnseite ein als Hohlprofil ausgebildetes Anschlussprofil (80) vorgesehen ist, dessen Höhe (y) dem Abstand der beiden Quer- oder Flankenwände (46) des zugeordneten Stoßfängers (40ₐ) entspricht.

13. Stoßfänger nach Anspruch 12, **dadurch gekennzeichnet, dass** das Anschlussprofil (80) axial an die Halterung (60ₐ) angeformt ist.

14. Stoßfänger nach Anspruch 13, **dadurch gekennzeichnet, dass** die Kraglänge (kₗ) des Anschlussprofils (80) der Halterung (60ₐ) der Breite des Stoßfängers (40ₐ) entspricht.

15. Stoßfänger nach Anspruch 13 oder 14, **dadurch gekennzeichnet, dass** das Anschlussprofil (80) in eine offene Kammer (76) des Stoßfängers (40ₐ) eingeschoben ist, der beidseits jeweils eine geschlossene Kammer (74) zugeordnet ist.

16. Stoßfänger nach Anspruch 15, **dadurch gekennzeichnet, dass** die geschlossene Kammer (74) von einer Querwand (46) des Stoßfängers (40ₐ) sowie einem angeformten Rinnenprofil (78) begrenzt ist.

17. Stoßfänger nach Anspruch 16, **dadurch gekennzeichnet, dass** eine vom Anschlagprofil (80) in Abstand (kₗ) von dessen Stirnkante (68) ausgehende Stirnkante (79ₐ) des Deformationsprofils (60ₐ) dem Rinnenprofil (78) des Stoßfängers (40ₐ) zugeordnet und mit der Außenfläche von dessen innerem Profilgurt (44ᵢ) verschweißt ist.

## Claims

1. A bumper with deformation elements (60) attached to it as holder for attaching it to a vehicle, in particular to the longitudinal chassis beams of a passenger vehicle, the bumper being made up of profile walls spaced apart and forming an external or compression flange (44) or an internal or tension flange (44i), and of a pair of lateral or side walls (46) extending from these, and the deformation element being designed as a hollow profile with side walls and transverse walls that connect these, the deformation element or the holder (60, 60ₐ) being assigned to the inner face (42) of the outer or compressive flange (44) with a front face (68) and welded to the bumper(40), **characterised in that** the deformation element or the holder (60, 60ₐ) is welded, on the side facing the vehicle's centre, in the transversal direction to this internal flange and, on the vehicle's outer side, in the longitudinal direction to the lateral walls (46) of the bumper.

2. Bumper according to claim 1, **characterised in that** the holder (60, 60ₐ) penetrates the internal or tension flange (44ᵢ) of the bumper (40, 40ₐ).

3. Bumper according to claim 1 or 2, **characterised in that** the front face (68) lies against the internal surface (42) of the bumper (40, 40ₐ).

4. Bumper according to claim 1 or 2, **characterised in that** the front face (68) of the holder (60) is located at a small distance from the internal surface (42) of the bumper (40).

5. Bumper according to any one of claims 1 to 4, **characterised in that** the holder (60, 60ₐ) penetrates a central strut (48) that is formed parallel to the lateral walls (46).

6. Bumper according to claim 4 or 5, **characterised in that** the central strut (48) lies in the attachment area of the front face (68) of the holder (60) in the form of a residual rim (48ₐ) with a small cross section.

7. Bumper according to claim 6, **characterised in that** the central strut (48) is assigned to one of the two lateral walls (46) at a small distance (t).

8. Bumper according to claim 5, **characterised in that** the central strut (48) and neighbouring lateral wall (46) define a reinforced area (P) of the bumper (40, 40ₐ).

9. Bumper according to any one of claims 1 to 8, **characterised in that** a recess (50) of the internal or tension flange (44i) starts from its front face (12ₐ), that extends between the two lateral and side walls (46) and ends at an end corner (52) of the internal or tension flange that is located in-between these.

10. Bumper according to claim 9, **characterised in that** the end corner (52) forms a lateral stop corner for the holder (60).

11. Bumper according to any one of claims 1 to 10, **characterised in that** the holder (60, 60ₐ) is connected by welded joints (56, 58) to the surfaces (47) of the lateral walls (47) of the cross bar (40, 40a) facing it and/or to the surface of the internal or tension flange (44i).

12. Bumper according to any one of claims 1 to 11, **characterised in that** the holder (60a) is provided in the area of a front face with a connection profile (80) designed in the form of a hollow profile, whose height (y) corresponds to the distance between the two lateral or side walls (46) of the assigned bumper (40ₐ).

13. Bumper according to claim 12, **characterised in that** the connection profile (80) is axially mounted to the holder (60a).

14. Bumper according to claim 13, **characterised in that** the protruding length (k₁) of the connection profile (80) of the holder (60ₐ) corresponds to the width of the bumper (40ₐ).

15. Bumper according to claim 13 or 14, **characterised in that** the connection profile (80) is inserted into an open chamber (76) of the bumper (40a), to which a closed chamber (74) is assigned respectively on each of both sides.

16. Bumper according to claim 15, **characterised in that** the closed chamber (74) is bordered by a lateral wall (46) of the bumper (40a) and an integrally mounted channel-shaped profile (78).

17. Bumper according to claim 16, **characterised in that** a front edge (79a) of the deformation profile (60a) that starts at a distance (k₁.) from the front face (68) of the stop profile (80) is assigned to the channel-shaped profile (78) of the bumper (40a) and welded to the external surface of the bumper's (40a) internal profile flange (44ᵢ).

## Revendications

1. Pare-chocs comprenant des éléments de déformation (60) montés sur celui-ci comme supports permettant de le fixer sur un véhicule, en particulier sur des longerons d'une voiture particulière, des parois de profilé placées à distance l'une de l'autre respectivement en tant que bande extérieure ou de compression (44) et bande intérieure ou de traction (44ᵢ) et une paire de parois transversales ou de flanc (46) formées sur celles-ci formant le pare-chocs et l'élément de déformation étant conçu sous forme de profilé creux comprenant des parois latérales et des parois transversales reliant celles-ci, ledit élément de déformation ou support (60, 60ₐ), par une face frontale (68), étant associé à la face intérieure (42) de la bande extérieure ou de compression (44) et soudé au pare-chocs (40, 40a),
**caractérisé en ce que** l'élément de déformation ou support (60, 60ₐ) est soudé dans le sens transversal à ladite bande intérieure par le côté orienté vers le centre du véhicule et dans le sens longitudinal aux parois transversales (46) du pare-chocs par le côté orienté vers l'extérieur du véhicule.

2. Pare-chocs selon la revendication 1, **caractérisé en ce que** le support (60, 60ₐ) traverse la bande intérieure ou de traction (44ᵢ) du pare-chocs (40, 40a).

3. Pare-chocs selon la revendication 1 ou 2, **caractérisé en ce que** la face frontale (68) s'appuie contre la face intérieure (42) du pare-chocs (40, 40ₐ).

4. Pare-chocs selon la revendication 1 ou 2, **caractérisé en ce que** la face frontale (68) du support (60) s'étend à faible distance de la face intérieure (42) du pare-chocs (40).

5. Pare-chocs selon l'une des revendications 1 à 4, **caractérisé en ce que** le support (60, 60ₐ) traverse une nervure centrale (48), formée parallèlement aux parois transversales (46).

6. Pare-chocs selon la revendication 4 ou 5, **caractérisé en ce que** la nervure centrale (48) s'étend dans la zone d'attache de la face frontale (68) du support (60) sous forme de bande résiduelle (48ₐ) de faible section transversale.

7. Pare-chocs selon la revendication 6, **caractérisé en ce que** la nervure centrale (48) est associée à faible distance (t) à l'une des deux parois transversales (46).

8. Pare-chocs selon la revendication 5, **caractérisé en ce que** la nervure centrale (48) et la paroi transversale voisine (46) définissent une zone de renfort (P) du pare-chocs (40, 40ₐ).

9. Pare-chocs selon l'une des revendications 1 à 8, **caractérisé en ce qu'**un creux (50) de la bande intérieure ou de traction (44ᵢ) part de sa face frontale (12ₐ), lequel creux s'étend entre les deux parois transversales ou de flanc (46) et se termine à une arête frontale (52) de ladite bande intérieure ou de traction passant entre celles-ci.

10. Pare-chocs selon la revendication 9, **caractérisé en ce que** l'arête frontale (52) est conçue sous forme d'arête de butée latérale pour le support (60).

11. Pare-chocs selon l'une des revendications 1 à 10, **caractérisé en ce que** le support (60, 60ₐ) est relié par des soudures (56, 58) aux surfaces (47) des parois transversales (46) de la poutre transversale (40, 40ₐ) qui sont orientées vers lui et/ou à la surface de la bande intérieure ou de traction (44ᵢ).

12. Pare-chocs selon l'une des revendications 1 à 11, **caractérisé en ce que** le support (60ₐ) est pourvu, au niveau d'une face frontale, d'un profilé de raccordement (80) conçu sous forme de profilé creux, dont la hauteur (y) correspond à la distance séparant les deux parois transversales ou de flanc (46) du pare-chocs associé (40ₐ).

13. Pare-chocs selon la revendication 12, **caractérisé en ce que** le profilé de raccordement (80) est formé axialement sur le support (60ₐ).

14. Pare-chocs selon la revendication 13, **caractérisé en ce que** la longueur de porte-à-faux (k₁) du profilé de raccordement (80) du support (60ₐ) correspond à la largeur du pare-chocs (40ₐ).

15. Pare-chocs selon la revendication 13 ou 14, **caractérisé en ce que** le profilé de raccordement (80) est inséré dans un compartiment ouvert (76) du pare-chocs (40ₐ), auquel est associé, respectivement sur chacun des deux côtés, un compartiment fermé (74).

16. Pare-chocs selon la revendication 15, **caractérisé en ce que** le compartiment fermé (74) est délimité par une paroi transversale (46) du pare-chocs (40ₐ) et par un profilé en forme de gouttière (78) formé sur celui-ci.

17. Pare-chocs selon la revendication 16, **caractérisé en ce qu'**une arête frontale (79ₐ) du profilé de déformation (60ₐ), partant du profilé de butée (80) à une distance (k₁) de l'arête frontale (68) de celui-ci, est associée au profilé en forme de gouttière (78) du pare-chocs (40ₐ) et soudée à la face extérieure de la bande profilée intérieure (44ᵢ) de celui-ci.
